# EUROPÄISCHE PATENTSCHRIFT

(11) **EP 3 030 802 B1**
(45) Veröffentlichungstag und Bekanntmachung des Hinweises auf die Patenterteilung: **05.06.2019**
(21) Anmeldenummer: 14761784.9
(22) Anmeldetag: 16.07.2014
(51) Int. Cl.: F16D 23/14

(54) **REIBUNGSKUPPLUNG MIT BETÄTIGUNGSEINRICHTUNG**
FRICTION COUPLING HAVING AN ACTUATING DEVICE
EMBRAYAGE À FRICTION ÉQUIPÉE D'UN MOYEN D'ACTIONNEMENT

(30) Priorität: 07.08.2013 DE 102013215578
(43) Veröffentlichungstag der Anmeldung: 15.06.2016
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2014/200324
(87) Internationale Veröffentlichungsnummer: WO 2015/018410

(56) Entgegenhaltungen:
- DE-A1-102004 019 798
- DE-A1-102011 050 709

## Beschreibung

Die Erfindung betrifft eine Reibungskupplung mit einer Gegendruckplatte, einer gegenüber dieser drehfest und axial von einem Hebelsystem gegen diese vorspannbaren Anpressplatte, zwischen Gegendruckplatte und Anpressplatte angeordneten Reibbelägen, einer drehfest mit einer Getriebeeingangswelle verbundenen Kupplungsscheibe sowie einer die Anpressplatte an radial innen an dem Hebelsystem angeordneten, über den Umfang verteilten Hebelelementen entlang eines Betätigungswegs verlagernden Betätigungseinrichtung mit einem von einem Antrieb verlagerten, koaxial um die Getriebeeingangswelle angeordneten Lagerträger und einem zwischen Lagerträger und Hebelelementen angeordneten Betätigungslager.

Reibungskupplungen sind aus Antriebssträngen beispielsweise als einfache Reibungskupplungen, in Doppelkupplungen untergebrachte Teilkupplungen und als hybridische Komponenten eines hybridischen Antriebsstrangs miteinander verbindende Hybridkupplungen bekannt. Hierbei wird unter Zwischenlegung von Reibbelägen einer Kupplungsscheibe eine axial verlagerbare Anpressplatte gegen eine axial fest angeordnete Gegendruckplatte verspannt, so dass bei Verspannung ein Reibeingriff mit den Reibbelägen ausgebildet und ohne Verspannung der Reibeingriff aufgelöst wird. Die Vorspannung der Anpressplatte erfolgt mittels eines Hebelsystems mit radial innen angeordneten, über den Umfang angeordneten Hebelelementen, welche von einer Betätigungseinrichtung entlang eines Betätigungswegs axial beaufschlagt werden. Abhängig von der konstruktiven Ausbildung als zwangsweise geöffnete Reibungskupplung (normally closed) oder zwangsweise geschlossene Reibungskupplung (normally open) öffnet beziehungsweise schließt die Betätigungseinrichtung die zuvor geöffnete beziehungsweise geschlossene Reibungskupplung durch Anlegen einer Betätigungskraft an das Hebelsystem, je nach Ausbildung der Reibungskupplung eine Tellerfeder, eine Hebelfeder oder federbelastete Hebel.

Als Betätigungseinrichtung kann beispielsweise ein Betätigungshebel dienen, der sich an einem Hebelpunkt zum Gegenhalten der Betätigungskraft axial abstützt, an einem weiteren Hebelpunkt von einem Antrieb axial verlagert wird und an dem letzten Hebelpunkt das Hebelelement axial beaufschlagt. Eine derartige Betätigungseinrichtung ist beispielsweise aus der DE 10 2006 050 956 A1 bekannt. Hierbei ist ein als Druckzylinder ausgebildeter Antrieb an einem als Antriebsstelle vorgesehenes Hebelende und eine ein Drucklager eines Hebelelements beaufschlagende Abtriebsstelle an dem einen Hebelende des Betätigungshebels angeordnet. Zwischen den beiden Hebelenden ist die gehäusefeste Abstützstelle am Hebelpunkt des Betätigungshebels vorgesehen. Die Antriebskraft des Antriebs wird an der Abstützstelle abgestützt und in die Betätigungskraft zur Betätigung des Hebelelements umgelenkt. Hierbei werden Antriebsstelle, Abtriebsstelle und Abstützstelle jeweils nur in eine axiale Richtung beaufschlagt.

Der Betätigungshebel verlagert einen Lagerträger, an dem ein Betätigungslager angeordnet ist, so dass eine Drehentkoppelung zwischen der drehenden Reibungskupplung mit deren Hebelelementen und dem nicht drehenden Lagerträger vorgesehen sein kann. Hierbei ist das Betätigungslager bevorzugt als Schrägkugellager ausgebildet und überträgt lediglich in eine axiale Richtung Betätigungskräfte, beispielsweise je nach Art der Betätigung der Reibungskupplung in Zug- oder Druckrichtung.

In der DE 10 2011 050 709 A1 ist eine Kupplung mit einer Betätigungseinrichtung gezeigt, bei welcher ein Betätigungslager so ausgebildet ist, dass es in der Lage ist auf Hebelelemente zur Kupplungsbetätigung bidirektional Kraft übertragen kann.

Aus der DE 10 2004 019 798 A1 ist es bekannt, dass die Hebelelemente zur Kupplungsbetätigung spielfrei in einem Betätigungslager aufgenommen werden können.

Aufgabe der Erfindung ist die Weiterbildung einer Reibungskupplung mit einer Betätigungseinrichtung, welche mittels einer Zug- und einer Druckkraft betätigbar ist.

Die Aufgabe wird durch den Gegenstand des Anspruchs 1 gelöst. Die von diesem abhängigen Unteransprüche sowie die Beschreibung geben vorteilhafte Ausführungsbeispiele des Gegenstands des Anspruchs 1 wieder.

Die vorgeschlagene Reibungskupplung enthält eine aus einem Einmassenschwungrad, einer sekundären Schwungmasse, einer zentralen Druckplatte einer Doppelkupplung und dergleichen gebildete Gegendruckplatte, einer gegenüber dieser drehfest und axial von einem Hebelsystem gegen diese vorspannbare Anpressplatte, zwischen Gegendruckplatte und Anpressplatte angeordnete Reibbeläge einer drehfest mit einer Getriebeeingangswelle verbundenen Kupplungsscheibe sowie einer die Anpressplatte an radial innen an dem Hebelsystem angeordneten, über den Umfang verteilten Hebelelementen entlang eines Betätigungswegs verlagernde Betätigungseinrichtung mit einem von einem Antrieb verlagerten, koaxial um die Getriebeeingangswelle angeordneten Lagerträger und ein zwischen Lagerträger und Hebelelementen angeordnetes Betätigungslager. Die vorgeschlagene Reibungskupplung ist eine sogenannte push/pull-Kupplung. Dies bedeutet, dass die Reibungskupplung über einen Teil des Betätigungswegs mittels Zugkräften und über einen Teil mittels Druckkräften von einem entsprechenden Antrieb, beispielsweise einem Elektromotor mit Getriebe oder einem oder mehreren bidirektional wirksamen Druckzylindern betätigt wird, wobei der Antrieb bevorzugt einen Betätigungshebel an einer Antriebsstelle belastet und der Lagerträger an einer Abtriebsstelle belastet wird und sich an einer gehäusefesten Abstützstelle beispielsweise an einem Getriebegehäuse axial abstützt. Je nach Anordnung von Antriebs- und Abtriebsstelle und Abstützstelle ist der Betätigungshebel dabei als ein- oder zweiarmiger Hebel wirksam. Zur Übertragung von Druck- und Zugkräften vom Antrieb auf das Hebelsystem weist die Betätigungseinrichtung ein als Rillenlager ausgebildetes Betätigungslager auf. Unter Rillenlager sind massive oder aus Blech hergestellte Kugel-, Tonnen- oder Kugeltonnenlager zu verstehen. Hiervon sind auch sogenannte Vierpunktlager umfasst. Die Hebelelemente, beispielsweise Tellerfeder- oder Hebelfederzungen einer Tellerfeder oder Hebelfeder gegenüber sind an einem Lagerring des Rillenlagers in beide Richtungen entlang des Betätigungswegs im Wesentlichen spielfrei angelegt. Hierzu können die Hebelelemente axial beidseitig an ballig ausgebildete Abstützflächen des Lagerrings im Wesentlichen spielfrei angelegt sein. Hierbei wird eine ballige Abwälzung der im Wesentlichen planen Hebelelemente auf den Abstützflächen erzielt. Erfindungsgemäß können die Hebelelemente in beide axiale Richtungen im Bereich von die Hebelelemente axial abstützenden Abstützflächen des Lagerrings ballige Anlageflächen ausbilden. Hierbei wälzen die ballig ausgebildeten Hebelelemente auf den im Wesentlichen planen Abstützflächen des Lagerrings ab. An einem Hebelelement kann jeweils ein in eine Richtung ballig erweiterter Abschnitt vorgesehen sein. Zur spielfreien Kraftübertragung in beide Richtungen können die Hebelelemente in beide Richtungen axial gegenüber dem Lagerring elastisch vorgespannt sein.

Gemäß einer vorteilhaften Ausführungsform kann der die Hebelelemente beaufschlagende Lagerring als Außenring ausgebildet sein. Der Innenring des Betätigungslagers kann hierbei an dem Lagerträger fest und verdrehsicher aufgenommen sein. Der Außenring kann eine erste nach radial innen erweiterte Abstützfläche und eine zweite, axial beabstandet zu dieser auf einer Abdeckscheibe vorgesehene Abstützfläche aufweisen. Hierbei können Lagerring und Abdeckscheibe mittels einer Bajonettverbindung nach Einbringen der Hebelelemente miteinander axial fest und drehfest miteinander verbunden werden und damit die beidseitige axiale Abstützung der Hebelelemente bilden. Hierbei kann die Schnittstelle zwischen Abdeckscheibe und Lagerring so gelegt werden, dass die Abdeckscheibe den axialen Abstand zwischen den beiden Abstützflächen festlegt, indem die Abdeckscheibe im Querschnitt gewinkelt ausgebildet ist und mit nach radial an dem Lagerring erweiterten Abstützhaken die Bajonettverbindung bildet. Alternativ kann der Lagerring den axialen Abstand festlegen, indem die Abdeckscheibe im Wesentlichen plan ausgebildet ist und mit am Innenumfang des Lagerrings axial beabstandet zu der ersten Abstützfläche nach radial außen erweiterte Abstützhaken die Bajonettverbindung bildet. Zwischen diesen Extremzuständen können weitere Schnittstellen, bei denen Abdeckscheibe und Lagerring die axiale Überbrückung bilden, vorgesehen sein. Die elastische Abstützung der Hebelelemente gegenüber Abstützflächen des Lagerrings kann dadurch erfolgen, dass zwischen Hebelelementen einerseits und Abdeckscheibe und/oder Lagerring andererseits eine axial wirksame Federscheibe vorgesehen ist. Hierbei können Abdeckscheibe und Federscheibe im Sinne einer Bajonettverbindung in die Abstützhaken eingreifen. Weiterhin kann die Federscheibe für die Abdeckscheibe eine Verdrehsicherung bilden, indem im montierten Zustand der Bajonettverbindung entsprechende Federelemente der Federscheibe in umfangsseitige Zwischenräume zwischen Abstützhaken und Abdeckscheiben eingreifen.

Die Verbindung zwischen Betätigungslager wie Rillenkugellager, Vierpunktlager und dergleichen und Lagerträger erfolgt mittels einer verdrehgesicherten und beidseitig axial im Wesentlichen spielfreien Rastverbindung wie Schnappverbindung, Bajonettverbindung oder dergleichen. Alternativ kann eine verdrehgesicherte Schraubverbindung vorgesehen sein.

Mit anderen Worten muss das Betätigungslager so mit der Reibungskupplung verbunden werden, dass es diese je nach Bedarf über den gesamten oder einen Teil des Betätigungswegs zudrücken oder aufziehen kann. Das Betätigungslager selbst muss Axialkräfte in beide Richtungen übertragen können und auch die Anbindung des Betätigungslagers an den Betätigungshebel der Betätigungseinrichtung muss für beidseitige wie bidirektionale Kraftübertragung geeignet sein.

Die vorgeschlagenen Reibungskupplungen werden bevorzugt mittels Hebelelementen wie Federzungen von Tellerfedern oder Hebelfedern betätigt, die durch die Schwenkbewegung, die sie bei der Betätigung ausführen, nur schwer spielfrei an das Betätigungslager angebunden werden können. Hierbei kann ein Hebelsystem mit Hebelelementen ohne Kuppen wie balligen Anformungen vorgesehen sein, die zwischen zwei gewölbten mit dem Betätigungslager verbundenen Abstützflächen positioniert sind. Wenn die beiden gewölbten Abstützflächen fest miteinander verbunden sind, so dass sich deren Abstand nicht ändert, besteht die Gefahr, dass eine Bewegung der Hebelelemente bei großen Schwenkwinkeln behindert wird oder ein relevantes Spiel zwischen den Hebelelementen und den gewölbten Abstützflächen vorgesehen werden muss. Elastisch gegeneinander verspannte Abstützflächen, zwischen denen die Hebelelemente eingespannt werden, können zur Spielverringerung vorgesehen werden. Alternativ können die balligen Wölbungen statt an den Lagerbauteilen des Betätigungslagers an den Hebelelementen vorgesehen sein. Beispielsweise können an jedem Hebelelement zwei gewölbte Flächen vorgesehen wie eingeformt sein, die zwei in entgegengesetzte Richtung weisende Anlageflächen bildende um eine gemeinsame Zylinderachse drehende Zylinderflächen aufweisen. Werden derartige Hebelelemente zwischen zwei parallelen mit dem Betätigungslager verbundenen Abstützflächen eingebracht und vorgespannt, ändert sich der Abstand zwischen den gewölbten Flächen wie Federkuppen und den Abstützflächen auch bei starken Schwenkbewegungen des Hebelsystems nicht. Um radial innen an den Hebelelementen gewölbte Anlageflächen aus aus dünnem Federblech gebildeten Hebelsystemen ausformen zu können, wird vorteilhafterweise jeweils ein Teil des radial inneren Hebelelements in die eine Richtung und der andere in die andere Richtung gewölbt. Ist die Materialstärke des Hebelsystems ausreichend stark, können die Wölbungen der Anlageflächen in das Material eingeprägt werden, so dass zwei Zylinderflächen entstehen, die sich direkt gegenüberliegen. Eine weitere Möglichkeit besteht darin, über den Umfang verteilt, beispielsweise jedes zweite Hebelelement in entgegengesetzte Richtung auszuformen.

Die Kontaktstellen zwischen dem Betätigungslager und den Hebelelementen können mittels eines axial wirksamen Energiespeichers, beispielsweise einer Feder, Federelementen, einer Ringfeder und dergleichen vorgespannt sein.

Neben der spielfreien Verspannung der Hebelelemente zwischen den Abstützflächen des zugehörigen Lagerrings des Betätigungslagers, ist eine Verbindung zwischen dem Betätigungslager und dem Lagerträger zur Übertragung von Kräften in beide Richtungen vorgesehen, die bevorzugt spielfrei oder zumindest spielarm ausgebildet ist. Hierzu wird beispielsweise eine Bajonettverbindung zwischen dem nichtdrehenden Lagerring und dem Lagerträger vorgesehen. Diese Verbindung ist bezüglich ihrer Montage einfach und eignet sich besonders für Betätigungslager mit aus Blech hergestellten Lagerringen. Hierbei kann die lagerseitige Bajonettkontur direkt aus dem Blechring ausgeformt werden. Bei der Montage von Betätigungslager und Lagerträger wird in bevorzugter Weise zuerst ein zusätzliches Sicherungselement auf den Lagerträger aufgeschoben, das für die spätere Befestigung des Betätigungslagers vorgesehen ist, bevor das Betätigungslager auf den Lagerträger montiert wird. Wenn das Betätigungslager über den Lagerträger geschoben wird, werden nach radial innen weisende Laschen des Lagerinnenrings durch Aussparungen zwischen Erhebungen auf dem Lagerträger bewegt. Ist der Lagerinnenring ganz auf die Erhebungen des Lagerträgers aufgeschoben, kann der Lagerring so verdreht werden, dass dessen Laschen in taschenförmige Aussparungen hinter den Erhebungen gelangen. Werden die Laschen nun gegen die Erhebungen gedrückt, verhindern die Fortsätze, die die Taschen beidseitig flankieren, dass sich der Lagerinnenring auf dem Lagerträger verdrehen kann. Um zu verhindern, dass der Lagerinnenring zurückrutscht und so die Laschen an den Fortsätzen vorbeigleiten können, wird das Sicherungselement zwischen dem Lager und dem Lagerträger in eine Sperrposition gebracht.

Hierbei können unterschiedliche Sicherungselemente vorgesehen werden. Beispielsweise kann ein Sicherungsring, der nachdem der Lagerinnenring gegen die Erhebungen gedrückt ist, in die dann entstehende Lücke zwischen dem Lagerring und einer Schulter des Lagerträgers eingesetzt werden. Alternativ kann der Lagerinnenring zur Sicherung von Spielfreiheit des Lagerrings gegenüber dem Lagerträger vom Sicherungselement gegen die Erhebungen gedrückt werden. Hierbei sind Lagerträger und Sicherungselement jeweils mit einem Rampensystem mit gegeneinander ausgerichteten Rampen ausgestattet. Wird das Sicherungselement nach der Lagermontage relativ zum Lagerträger verdreht, stützt es sich mit seinen Rampen auf denen des Lagerträgers ab und schraubt sich so gegen den Lagerinnenring. Anstatt den aufgeführten Rampen kann ein Gewinde zwischen dem Sicherungselement und dem Lagerträger eingesetzt werden, um den Lagerring gleichermaßen spielfrei einzuspannen.

Auf ein Sicherungselement kann beispielsweise verzichtet werden, wenn ein vorderer Bereich des Lagerträgers mit Gewindenuten versehen ist. Hierbei lassen sich Laschen des Lagerringes, insbesondere in tangentiale Richtung leicht schräggestellte Laschen in die Gewindenuten des Lagerträgers einschrauben. Zweckmäßiger Weise können die Gewindenuten ein mehrgängiges Gewinde bilden, bei dem in jeden Gewindegang eine oder mehrere, beispielsweise zwei Laschen des Lagerrings eingreifen.

Weiterhin kann zwischen feststehendem Lagerring und Lagerträger eine Schnappverbindung wirksam angeordnet sein. Wenn hierbei federnde Laschen direkt aus dem Lagerträger ausgeformt werden, kann auf zusätzliche Befestigungselemente verzichtet werden. Während das Betätigungslager auf den Lagerträger aufgeschoben wird, werden die federnden Laschen nach radial innen gedrückt. Da bei komplett montierten Betätigungseinrichtungen der Bauraum radial innerhalb des Lagerträgers beispielsweise für eine Führungshülse des Lagerträgers oder andere Bauteile genutzt wird, können die federnden Laschen nicht nach innen schwenken und sich nicht ungewollt aushängen. Außerdem ist so sichergestellt, dass alle Laschen nach der Lagermontage eingerastet sind, wenn sich der Lagerträger auf die Führungshülse stecken lässt. Wenn das Betätigungslager von dem Lagerträger getrennt werden soll, können nach der Demontage der Führungshülse die federnden Laschen wieder nach innen gedrückt werden, wenn die Laschen nicht an einer Sperrschulter des Lagerträgers enden sondern axial über das Betätigungslager hinausragen. Dadurch kann mit einem Werkzeug an dem Betätigungslager vorbei auf die Enden der federnden Laschen gedrückt werden. Werden alle Laschen gleichzeitig nach innen gedrückt, kann das Betätigungslager wieder vom Lagerträger abgezogen werden. Schnappverbindungen können aber auch ohne federnde Bereiche am Lagerträger oder am Betätigungslager vorgesehen sein. Hierbei können bewegliche oder federnde Elemente wie Sperrelemente von anderen separat ausgebildeten Bauteilen gebildet werden.

Der Lagerträger kann ganz oder teilweise aus Kunststoff, beispielsweise Thermoplast hergestellt sein. Die Laschen des Lagerringes oder andere Anschlusskonturen nach der Montage oder bei der Montage des Betätigungslagers auf den Lagerträger können von Kunststoff umschlossen werden. Hierzu kann der Kunststoff partiell erhitzt werden, bis er formbar wird, oder es können mehrere Kunststoffteile so miteinander beispielsweise mittels Reibschweißen oder Ultraschallschweißen so verbunden werden, dass sie die Anschlusskonturen des Betätigungslagers ganz oder teilweise umschließen.

Bei Betätigungseinrichtungen für eine Doppelkupplung mit zwei ineinander geschachtelten Reibungskupplungen sind die Lagerträger der beiden Betätigungslager bevorzugt radial übereinander angeordnet, wobei der radial innere Lagerträger beispielsweise meistens mehrteilig, beispielsweise aus zwei axial aneinander gefügten Bauteilen ausgebildet ist, um diesen in den radial äußeren Lagerträger einsetzen zu können. Wenn der Lagerträger zwischen den beiden Trennstellen, beispielsweise einer Trennstelle im Lagerträger und Trennstelle zwischen Lager und Lagerträger mehrteilig so ausgeführt wird, dass Bauteile in diesem Bereich axial gegeneinander verschoben werden können, lässt sich der axiale Kraftfluss einer Verspannung zwischen Betätigungslager und Lagerträger über beide Trennstellen leiten. Dadurch lassen sich beide Trennstellen durch eine einzige Verspannung beispielsweise mittels einer entsprechenden Verspannvorrichtung verspannen und somit deren axiales Spiel eliminieren.

Als Betätigungslager für bidirektionale Kraftübertragung werden Rillenkugellager in Blechausführung bevorzugt, die mit einer Blechkontur wie Anbindekontur oder Anschlusskontur versehen sind, die die Hebelelemente wie Federzungen zur festen oder axial elastischen Verspannung gegenüber dem Lagerträger einschließt. Hierbei sind Außenringe mit einem flachen Bodenbereich vorgesehen, an dessen radial äußerem Bereich sich ein näherungsweise zylindrisch ausgebildeter Bereich anschließt, in dem die Wölbung für eine Wälzkörperlaufbahn eingebracht ist. Am radial innen liegenden Rand des Bodenbereichs schließt sich entweder direkt eine Anschlusskontur für ein weiteres Blechbauteil an oder die Anschlusskontur ist durch einen weiteren zylindrischen Bereich des Lageraußenrings von dem Bodenbereich beabstandet. Der Lagerinnenring ist im Wesentlichen als zylindrischer Blechkörper geformt, in dessen mittleren Bereich sich die gewölbte nutähnliche Wälzkörperlaufbahn befindet und dessen Randbereiche entweder nach radial innen oder radial außen gebogen, beispielsweise geprägt oder durchgestellt sind, um den Lagerinnenring zu versteifen und/oder als Anschlusskontur zu dienen. Da der Lagerinnenring durch seine flache Bauform nicht so steif ist wie der Lageraußenring, kann es sinnvoll sein, den Lagerinnenring auf seine Nachbarbauteile, beispielsweise den Lagerträger aufzuschieben oder aufzupressen, damit der Lagerinnenring von diesem Nachbarbauteil unterstützt und in seiner runden Form gehalten wird. Dadurch, dass der Lagerinnenring keine oder nur unwesentliche Bereiche hat, die weiter radial nach außen stehen als die Wälzkörperlaufbahn, kann der Lagerinnenring bei der Lagermontage in den Lageraußenring gesteckt und radial verschoben werden, bis sich die zylindrischen Bereiche der beiden Lagerringe an einer Berührstelle berühren. Gegenüber dieser Berührstelle entsteht damit ein großer freier halbmondförmiger Bereich, in den die Wälzkörper wie Kugeln eingesetzt werden können. Anschließend wird der Lagerinnenring ins Zentrum des Lageraußenrings geschoben und die Wälzkörper gleichmäßig auf dem Umfang der Wälzkörperlaufbahn verteilt. Da durch die Gestaltung der Lagerringe die eine Seite der Wälzkörper nicht von den Lagerringen abgedeckt wird, kann von dieser Seite ein Käfig auf die Wälzkörper aufgesteckt werden, der die Wälzkörper in einem gleichmäßigen Abstand zueinander hält. Als letzter Montageschritt wird eine Dichtung eingesetzt. Durch diese Ausgestaltung ist trotz Blechdesign und der zusätzlichen Anschlusskonturen an beiden Lagerringen eine bidirektionale Kraftübertragung auf die Nachbarbauteile möglich, dessen Montageablauf dem von Serienproduktion von Industrierillenkugellagern mit massiven Stahlringen sehr ähnlich ist.

Der hier explizit anhand von Rillenkugellagern beschriebene Lageraufbau kann auch auf andere Lagertypen übertragen werden, die ebenfalls Kräfte in beide axiale Richtungen übertragen können. Dies trifft insbesondere auf Vierpunktlager oder Rillenkugellager mit Vierpunktschliff, bei denen sich lediglich die Form der Wälzlagerlaufbahn von Rillenkugellagern unterscheidet, zu. Weiterhin können mehrreihige Kugellager oder Rollenlager und dergleichen entsprechend eingesetzt werden. Der vorgeschlagene Lageraufbau lässt generell Wälzkörper in aus Blech geformten Lagerringen zu, die sowohl Laufbahnkonturen oder Führungskanten für die Kraftübertragung des Betätigungslagers in die eine als auch für die andere axiale Richtung aufweisen.

Es ist mit diesem Lageraufbau auch möglich, einen der beiden Lagerringe aus Blech und den anderen als massiven Lagerring herzustellen. Dabei bietet sich besonders eine Kombination aus einem massiven Lagerinnenring und einem als Blechteil ausgebildeten Lageraußenring an, der beispielsweise mit einer hier beschriebenen Anschlusskontur für die Hebelelemente der Reibungskupplung ausgestattet sein kann.

Die Anschlusskontur zur axial in beide Richtungen vorgespannten Aufnahme der Hebelelemente an einem Lagerring erfolgt bevorzugt mittels einer Bajonettverbindung und eines Federrings, der die Hebelelemente in eine Richtung vorspannt. Beispielsweise sind am Ende eines zylindrischen Bereichs des Lageraußenrings, der sich nach der Montage radial innerhalb der Hebelelemente befindet, Abstützhaken für eine Abdeckscheibe vorgesehen, die beispielsweise aus nach radial außen umgebogenen Blechlaschen gebildet sind. Um das Betätigungslager mit der Reibungskupplung zu verbinden, wird der zylindrische Bereich auf den durch die über den Umfang verteilten Hebelelemente gebildeten Kranz aufgesteckt und anschließend wird der Federring, der für die Vorspannung sorgen soll, mit einer profilierten Innenkontur auf die Blechlaschen des Lageraußenrings aufgelegt. Der Federring kann zwischen dem Lageraußenring und der Abdeckscheibe angeordnete Federlaschen aufweisen. An der Innenkontur des Federrings befinden sich sowohl schmale Fortsätze, die den Zwischenraum zwischen den Bajonettlaschen des Lageraußenrings in tangentialer Richtung nicht ganz ausfüllen und breite Fortsätze, die beidseitig an den Blechlaschen des Lageraußenrings anliegen oder zumindest nur ein sehr geringes Spiel dazu aufweisen. Damit die Fortsätze die Bewegung des Federrings nicht behindern können, kann zwischen den Funktionsflächen der Fortsätze und dem Ringkörper des Federrings ein schmaler elastischer Bereich vorgesehen werden. Nach dem Aufbringen des Federrings wird auf den Federring und die Blechlaschen des Lageraußenrings eine Abdeckscheibe aufgesetzt. Die Abdeckscheibe besitzt eine Innenkontur die auf die Blechlaschen des Lageraußenrings abgestimmt ist. Jeder Blechlasche ist ein Konturbereich zugeordnet, der im Wesentlichen aus drei Bereichen mit unterschiedlich großem Innendurchmesser besteht. Im Bereich mit dem größten Innendurchmesser ist der Innendurchmesser der Abdeckscheibe größer als der Außendurchmesser der Blechlaschen des Lageraußenrings, damit die Abdeckscheibe bei richtiger Ausrichtung über die Bajonettlaschen geschoben werden kann. An diesen Bereich schließt sich an der Innenkontur der Abdeckscheibe ein Bereich mit kleinerem Innendurchmesser an, der beim Verdrehen der Abdeckscheibe hinter die Blechlaschen geschoben wird. Dazu ist der Innendurchmesser in diesem Bereich kleiner als der Außendurchmesser der Blechlaschen, aber größer als deren Anbindungsbereich, in dem die Blechlaschen mit dem zylindrischen Bereich des Lageraußenrings verbunden sind. Der dritte Abschnitt im den Blechlaschen zugeordneten Konturbereich der Abdeckscheibe bildet einen Anschlag, mit dem das Verdrehen der Abdeckscheibe relativ zum Lageraußenring begrenzt wird, indem in diesem Bereich der Innendurchmesser noch kleiner ist und somit ein Fortsatz entsteht, der sich am Anbindungsbereich der benachbarten Blechlasche abstützt. Hierbei können genauso viele, weniger oder nur ein Anschlag vorgesehen sein. Da die Reibungskupplung immer in derselben Drehrichtung betrieben wird und damit das Lagerschleppmoment die Hebelelemente und die Lagerbauteile immer in dieselbe Richtung zueinander verdreht, drückt die Abdeckscheibe immer gegen die Anschläge, wodurch prinzipiell auf eine Verdrehsicherung in Gegenrichtung verzichtet werden kann. Um jedoch eine sichere und robuste Konstruktion zu gewährleisten und eine ungewollte Rückdrehung der Abdeckscheibe im Betrieb der Reibungskupplung und damit ein Lösen der Verbindung von Betätigungslager und Reibungskupplung zu vermeiden, ist eine zusätzliche Verdrehsicherung vorgesehen. Diese Verdrehsicherung ist bevorzugt aus den Konturen der ohnehin vorhandenen Bauteile gebildet. Hierzu liegen die schmalen Fortsätze des Federrings jeweils an einer Seite an den Blechlaschen des Lageraußenrings an, so dass auf der anderen Seite eine Lücke zwischen den Fortsätzen und den anderen Blechlaschen entsteht. Diese Lücken sind so breit wie die Anschlagsfortsätze an der Abdeckscheibe und sind auch so angeordnet, dass die Anschläge vor den Lücken zu liegen kommen, wenn der Lageraußenring und die Abdeckscheibe richtig montiert sind. Durch die Elastizität der schmalen Fortsätze oder durch plastisches Verformen der Fortsätze in vorzugsweise axialer Richtung, kann zumindest ein Fortsatz ganz oder teilweise vor die Anschläge gebracht werden und damit ein Rückdrehen der Abdeckscheibe verhindert werden.

Ein weiteres Ausführungsbeispiel enthält eine Verbindungsstelle zwischen dem Lageraußenring und der Abdeckscheibe mit einer geänderten Trennstelle der Bajonettverbindung. Hierbei ist die Verbindungsstelle zwischen dem Bodenbereich des Lageraußenrings und dem zylindrischen Blechbereich angeordnet, der sich radial innerhalb der Hebelelemente erstreckt. Bei dieser Ausführungsform ist der zylindrische Bereich radial innerhalb der Hebelelemente der Abdeckscheibe zugeordnet. Um eine Kollision zwischen den Abstützhaken und dem Lagerinnenring zu vermeiden, ist dessen Rand, der den Abstützhaken zugewandt ist, nach radial außen gebogen und/oder angeprägt. Zur Erleichterung der Montage des Betätigungslagers besitzt der Lageraußenring in diesem Bereich eine Wölbung nach radial außen, in die der Rand des Lagerinnenrings bei der Montage eintauchen kann.

Um die bajonettförmige Verbindungsstelle zwischen Abdeckscheibe und Lageraußenring zu schließen, kann statt durch Verdrehen des Lageraußenrings und der Abdeckscheibe zueinander, die Abdeckscheibe auch durch einen Sicherungsring auf dem Lageraußenring befestigt werden. Nach dem Durchschieben von Abstützhaken, beispielsweise einteilig aus dem Lageraußenring geformte Blechlaschen, durch Bereiche mit dem größten Innendurchmesser wird ein Sicherungsring über die Blechlaschen gelegt, der sich dadurch auf dem Umfang gesehen immer wechselseitig an den Bajonettlaschen und den weiter nach innen ragenden Bereichen der Abdeckscheibe abstützt. Am Inndurchmesser der Abdeckscheibe sind dann auch nur noch zwei unterschiedliche Durchmesserbereiche erforderlich. Die Blechlaschen weisen dabei zwei Bereiche auf, wobei die einen durch die Blechlaschen durchtauchen und die anderen weiter nach radial innen zeigen. Die Bereiche der Abdeckscheibe, die weiter nach innen ragen, stützen sich wie die zuvor beschriebenen Anschläge tangential auf beiden Seiten der Blechlaschen an deren Anbindungsbereich ab und stützen sich gleichzeitig in axialer Richtung hinter dem Sicherungsring ab.

Die Erfindung wird anhand der in den Figuren 1 bis 20 dargestellten Ausführungsbeispiele näher erläutert. Dabei zeigen:
- Figur 1: einen Teilschnitt durch eine bidirektional mittels einer Betätigungseinrichtung betätigten Reibungskupplung in schematischer Darstellung,
- Figur 2: eine konstruktive Ausbildung einer Betätigungseinrichtung im Schnitt,
- Figur 3: die Betätigungseinrichtung der Figur 2 in Ansicht,
- Figur 4: ein Detail des Schnitts der Figur 2,
- Figur 5: ein Hebelsystem einer Reibungskupplung in Teilansicht,
- Figur 6: ein Lagerträger und ein Betätigungslager einer gegenüber der Betätigungseinrichtung der Figur 2 leicht veränderten Betätigungseinrichtung im nicht montierten Zustand und in Ansicht,
- Figur 7: die Betätigungseinrichtung der Figur 6 im Teilschnitt,
- Figur 8: eine Betätigungseinrichtung mit Schraubverbindung zwischen Lagerträger und Betätigungslager in nicht montiertem Zustand und in Ansicht,
- Figur 9: eine Betätigungseinrichtung mit Schnappverbindung zwischen Lagerträger und Betätigungslager im Schnitt,
- Figur 10: die Betätigungseinrichtung der Figur 9 in nicht montiertem Zustand und in Ansicht,
- Figur 11: das Betätigungslager der Figur 4 vor der Montage der Hebelelemente in Ansicht,
- Figur 12: das Betätigungslager der Figur 4 vor der Montage der Hebelelemente in geschnittener Ansicht,
- Figur 13: das Betätigungslager der Figur 4 mit gefügter Federscheibe in Ansicht,
- Figur 14: das Betätigungslager der Figur 4 mit gefügter Federscheibe in geschnittener Ansicht,
- Figur 15: das Betätigungslager der Figur 4 mit gefügter Abdeckscheibe in Ansicht,
- Figur 16: das Betätigungslager der Figur 4 mit gefügter Abdeckscheibe in geschnittener Ansicht,
- Figur 17: das Betätigungslager der Figur 4 mit gefügter und verdrehter Abdeckscheibe in Ansicht,
- Figur 18: das Betätigungslager der Figur 4 mit gefügter und verdrehter Abdeckscheibe in geschnittener Ansicht,
- Figur 19: das Betätigungslager der Figur 4 mit komplett montierter Anschlusskontur
und
- Figur 20: zwei ineinander geschachtelte Betätigungseinrichtungen für eine Doppelkupplung in Detailansicht.

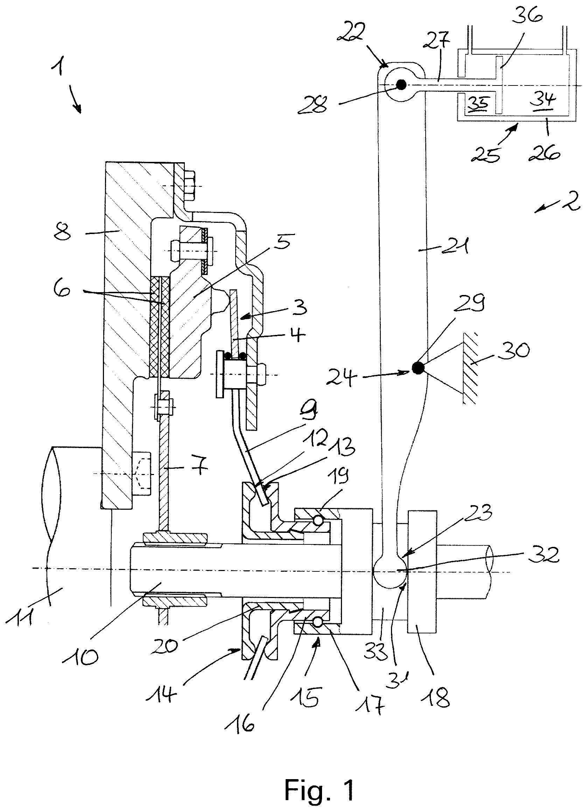

Die Figur 1 zeigt einen Teilschnitt durch die Reibungskupplung 1 und die diese betätigende Betätigungseinrichtung 2 in schematischer Darstellung. Bei der Reibungskupplung 1 handelt es sich um eine sogenannte push/pull-Kupplung, bei der mittels des Hebelsystems 3 - hier der Tellerfeder 4 im geschlossenen Zustand der Reibungskupplung 1 - die Anpressplatte 5 unter Verspannung der Reibbeläge 6 der mit der Getriebeeingangswelle 10 drehfest verbundenen Kupplungsscheibe 7 gegen die an der Kurbelwelle 11 einer Brennkraftmaschine fest aufgenommene Gegendruckplatte 8 verspannt wird. Durch axiales Verlagern der Hebelelemente 9 wie Tellerfederzungen mittels der Betätigungseinrichtung 2 in Richtung Gegendruckplatte 8 vermindert sich die Verspannung der Tellerfeder 4 und die Reibungskupplung 1 wird geöffnet. Hierbei übt die Betätigungseinrichtung 2 sowohl eine drückende als auch eine ziehende Funktion auf die Hebelelemente 9 aus.

Hierzu sind die im Wesentlichen plan ausgebildeten Hebelelemente 9 beidseitig an den ballig ausgebildeten Abstützflächen 12, 13 der Anschlusskontur 14 des Betätigungslagers 15 aufgenommen. In dem gezeigten Ausführungsbeispiel bildet der Lagerinnenring 16 des Betätigungslagers 15 die Anschlusskontur 14, während der um die Getriebeeingangswelle 10 koaxial angeordnete Lageraußenring 17 mit dem Lagerträger 18 verbunden ist. Das Betätigungslager ist als axial bidirektion Kräfte übertragendes Lager wie Rillenkugellager 19 ausgebildet. Der Lagerinnenring 16 ist mit der Abdeckscheibe 20 verrastet und bildet dadurch die Anschlusskontur 14 mit den Abstützflächen 12, 13 unter axialer Vorspannung der Hebelelemente 9. Die Anschlusskontur 14 kann auch spielbehaftet gegenüber den Abstützflächen 12, 13 ausgebildet sein.

Die axiale Verlagerung des konzentrisch um die Getriebeeingangswelle 10 eines nicht näher dargestellten Getriebes angeordneten Betätigungslagers 15 erfolgt drehentkoppelt mittels des Betätigungshebels 21, der über die Kraftangriffspunkte Antriebsstelle 22, Abtriebsstelle 23 und Abstützstelle 24 verfügt, um die Antriebskraft des Antriebs 25, welcher hier als bidirektional wirksamer Druckzylinder 26 ausgebildet ist, auf das Betätigungslager 15 unter Einhaltung vorgegebener Hebelverhältnisse zu übertragen. Zur Ausbildung einer bidirektionalen Kraftübertragung sind sämtliche Kraftangriffspunkte axial fest ausgebildet. Die Antriebsstelle 22 ist mit der Kolbenstange 27 des lediglich schematisch dargestellten Druckzylinders 26 mittels des Drehlagers 28 axial fest und verdrehbar verbunden. Der Betätigungshebel 21 ist an der zwischen Antriebsstelle 22 und der Abtriebsstelle 23 angeordneten, einen zweiarmigen Hebel ausbildenden Abstützstelle 24 mittels des Drehlagers 29 gegenüber dem nur angedeuteten Getriebegehäuse 30 axial fest und verdrehbar abgestützt. Die Abtriebsstelle 23 ist mittels der Lagerung 31 der gabelförmig und ballig ausgebildeten Hebelenden 32 wie Gabelköpfen des Betätigungshebels 21 gegenüber den Nuten 33 des Betätigungslagers 15 gebildet. Die Lagerung kann als Wälzlagerung beispielsweise mittels an den Hebelenden 32 angebrachten Rollen vorgesehen sein. In der dargestellten Ausführungsform tritt neben der Abwälzbewegung auch eine radiale Gleitbewegung auf.

Wird die Druckkammer 34 des Druckzylinders 26 mit einem größeren Druck als die Druckkammer 35 beaufschlagt, wird die Antriebsstelle 22 in Richtung Reibungskupplung 1 verlagert und damit die Abtriebsstelle 23 mit dem Betätigungslager 15 von der Reibungskupplung 1 weg verlagert, so dass die Hebelelemente 9 gezogen werden und damit die Reibungskupplung 1 geschlossen beziehungsweise ausgehend von einem Kraftneutralpunkt des Druckzylinders 26 gegenüber einer teilweise geschlossenen Reibungskupplung 1 weiter geschlossen wird. Wird die Druckkammer 35 mit einem größeren Druck als die Druckkammer 34 beaufschlagt, verlagert sich infolge der Verlagerung des Kolbens 36 des Druckzylinders 26 die Antriebsstelle 22 weg von der Reibungskupplung 1 und das Betätigungslager 15 drückt die Hebelelemente 9 in Richtung Gegendruckplatte 8, so dass der Reibeingriff zwischen Gegendruckplatte 8, Reibbelägen 6 und Anpressplatte 5 gelockert und so die Reibungskupplung 1 geöffnet beziehungsweise weiter geöffnet wird.

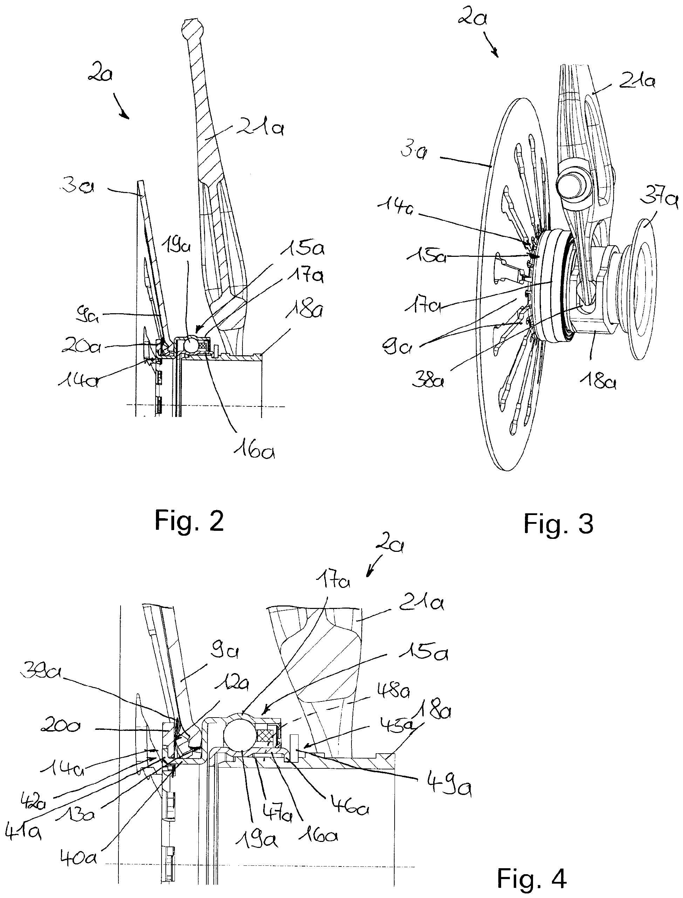

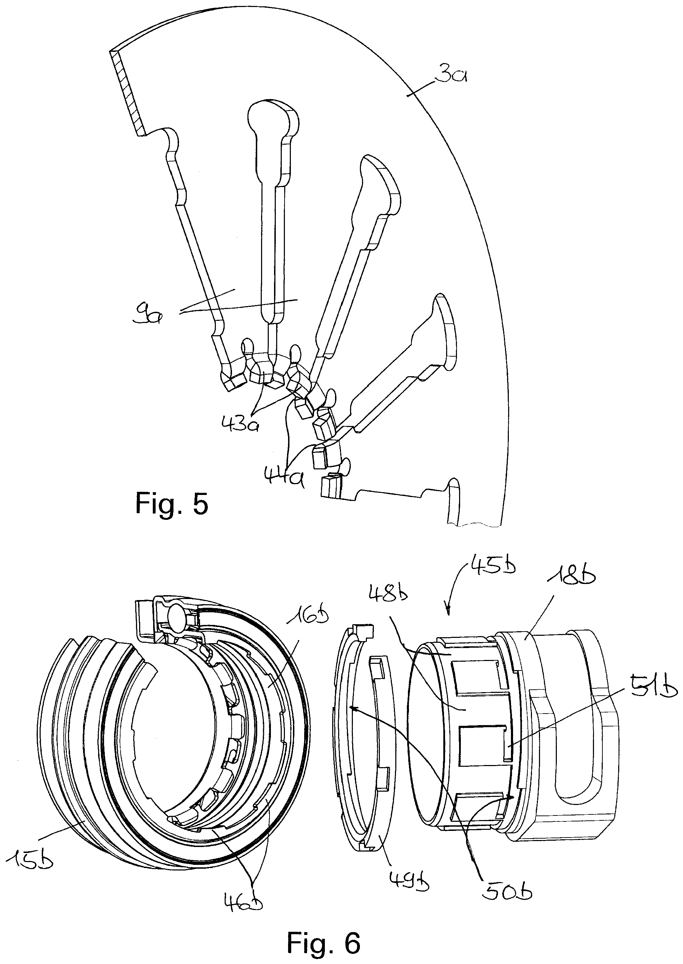

Die Figuren 2 bis 4 zeigen in der Gesamtschau die konstruktiv ausgearbeitete Betätigungseinrichtung 2a. Wie aus Figur 3 hervorgeht, ist der Lagerträger 18a verschiebbar auf der am Getriebegehäuse befestigten Führungshülse 37a aufgenommen. Der Lagerträger 18a wird mittels des in die Taschen 38a eingreifenden Betätigungshebels 21a von einem nicht dargestellten Antrieb, beispielsweise einem Elektromotor oder einem Druckzylinder in beide Richtungen angelenkt. Auf dem Lagerträger 18a ist das als Rillenkugellager 19a ausgebildete Betätigungslager 15a fest verriegelt aufgenommen. Der Lagerinnenring 16a und der Lageraußenring 17a des Betätigungslagers 15a sind aus Blechformteilen hergestellt. Der Lagerinnenring 16a ist hierbei mit dem Lagerträger 18a verbunden, während der Lageraußenring 17a in Verbindung mit der Abdeckscheibe 20a und der Federscheibe 39a die Anschlusskontur 14a für die Hebelelemente 9a des Hebelsystems 3a der nicht näher dargestellten Reibungskupplung bildet. Wie aus der Detaildarstellung der Figur 4 hervorgeht, enthält der Lageraußenring 17a die nach radial innen erweiterte Abstützfläche 13a und ist radial innen axial um den zylindrischen Bereich 40a erweitert, der die Hebelelemente 9a aufnimmt. Endseitig schließen sich an den zylindrischen Bereich 40a die Abstützhaken 41a in Form von radial außen erweiterten Blechlaschen an, die mit der Abdeckscheibe 20a eine Formschlussverbindung, hier die Bajonettverbindung 42a ausbilden. Die Abdeckscheibe 20a bildet unter Zwischenlegung der Federscheibe 39a die der Abstützfläche 13a gegenüberliegende Abstützfläche 12a. Die Federscheibe 39a sorgt für eine elastische Verspannung der Hebelelemente 9a zwischen den Abstützflächen 12a, 13a. Die Abstützflächen 12a, 13 sind im Wesentlichen plan ausgebildet, wobei die Hebelelemente 9a in beide Richtungen ballig ausgebildet sind und bei einer Verschwenkung des Hebelsystems 3a an den planen Abstützflächen spielfrei angelegt sind. Der Lagerinnenring 16a wird mittels der Formschlussverbindung 45a auf dem Lagerträger 18a fixiert. Hierzu wird der Lagerinnenring 16a über die über den Umfang mit nicht einsehbaren Vertiefungen 48a für die endseitigen Krallen 46a des Lagerinnenrings 16a auf die mit den Vertiefungen 48a abwechselnden Erhebungen 47a geschoben und verdreht, so dass die Krallen 46a mit den Erhebungen 47a umfangsseitig zur Deckung kommen. In die Vertiefungen 48a werden Laschen des Sicherungsrings 49a eingebracht, so dass der Lagerinnenring 16a axial fest und verdrehgesichert auf dem Lagerträger 18a aufgenommen ist. Alternativ können kurze Fortsätze an den Rückseiten der Erhebungen 47a angeordnet sein (siehe Figur 6), die ein unbeabsichtigtes Verdrehen des Lagerinnenrings 16a verhindern. Der Sicherungsring 49a kann dann entsprechend der Darstellung in Figur 4 hinter dem Lagerinnenring 16a angeordnet werden, da dieser nur noch ein unbeabsichtigtes Zurückrutschen des Lagerinnenrings 16a in die Montageposition verhindern muss.

Die Figur 5 zeigt das Hebelsystem 3a der Figuren 2 bis 4 in Teilansicht mit den über den Umfang verteilten Hebelelementen 9a. Zur Bildung einer beidseitig balligen Anlage an den Abstützflächen 12a, 13a der Anschlusskontur 14a der Figur 4 weist in dem gezeigten Ausführungsbeispiel jedes Hebelelement 9a jeweils in entgegengesetzte Richtung ballig und über den Umfang abwechselnd ausgebildete Wölbungen 43a, 44a auf. Infolge der geringen Materialstärke des Hebelsystems sind diese Wölbungen 43a, 44a durch Flächenverformung hergestellt.

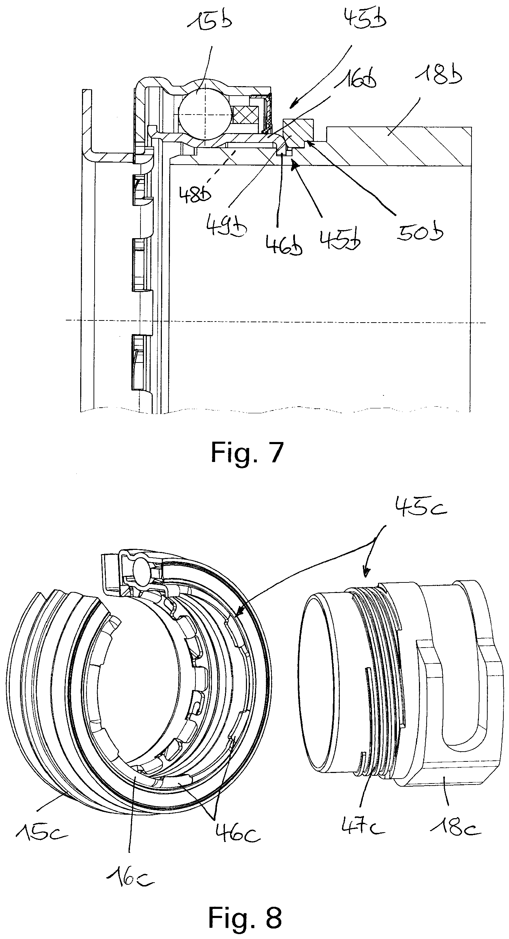

Die Figur 6 zeigt die mit dem Lagerträger 18a und dem Betätigungslager 15a der Figuren 2 bis 4 ähnlichen Lagerträger 18b und Betätigungslager 15b vor deren Fügevorgang in Ansicht und die Figur 7 im gefügten Zustand und im Teilschnitt. Im Unterschied zu diesen ist die Formschlussverbindung 45b zwischen dem Lagerträger 18b und dem Betätigungslager 15b in veränderter Weise ausgebildet. Zur Verbesserung der Spielfreiheit ist zwischen dem Sicherungsring 49b und dem Lagerträger 18b die Rampeneinrichtung 50b vorgesehen. Nach dem Aufbringen des Sicherungsrings 49b auf den Lagerträger 18b und Aufschieben des Lagerinnenrings 16b mit in die Vertiefungen 48b eingebrachten Krallen 46b und Verdrehen des Lagerinnenrings 16b in den Nuten 51b wird durch Verdrehen des Sicherungsrings 49b gegen den Lagerträger 18b gegebenenfalls bestehendes Spiel durch die Rampeneinrichtung 50b ausgeglichen.

Die Figur 8 zeigt im Unterschied zu den Figuren 2 bis 6 das Betätigungslager 15c und den Lagerträger 18c in nicht gefügtem Zustand mit der Schraubverbindung 45c. Hierbei wird das Betätigungslager 15c auf das bevorzugt mehrgängige Gewinde 47c des Lagerträgers 18c aufgeschraubt, indem die Krallen 46c in dessen Gewindegänge eingreifen. Die Krallen 46c können hierzu entsprechend tangential schräg gestellt sein.

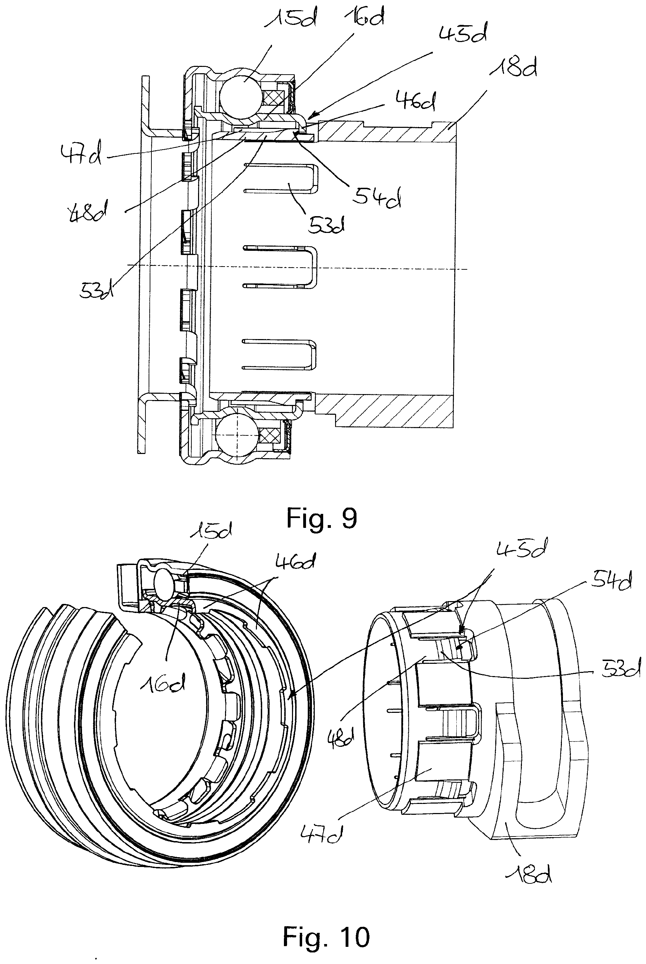

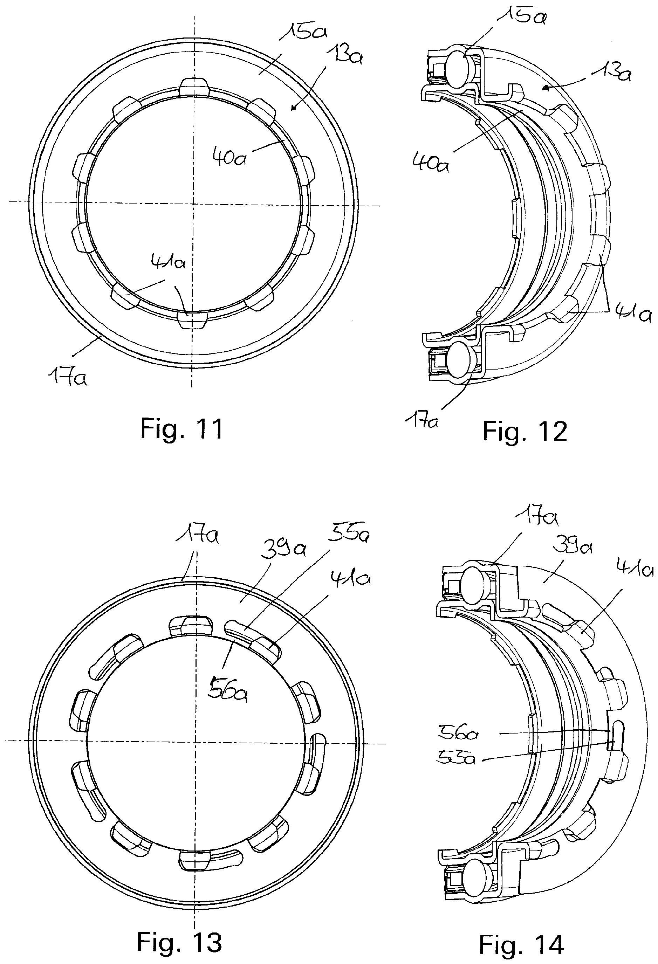

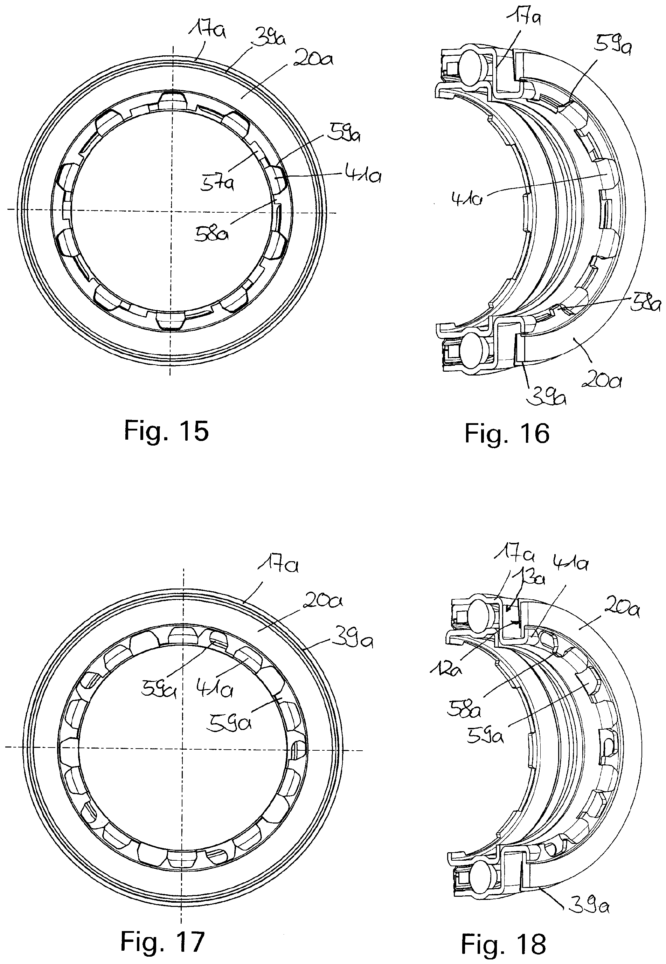

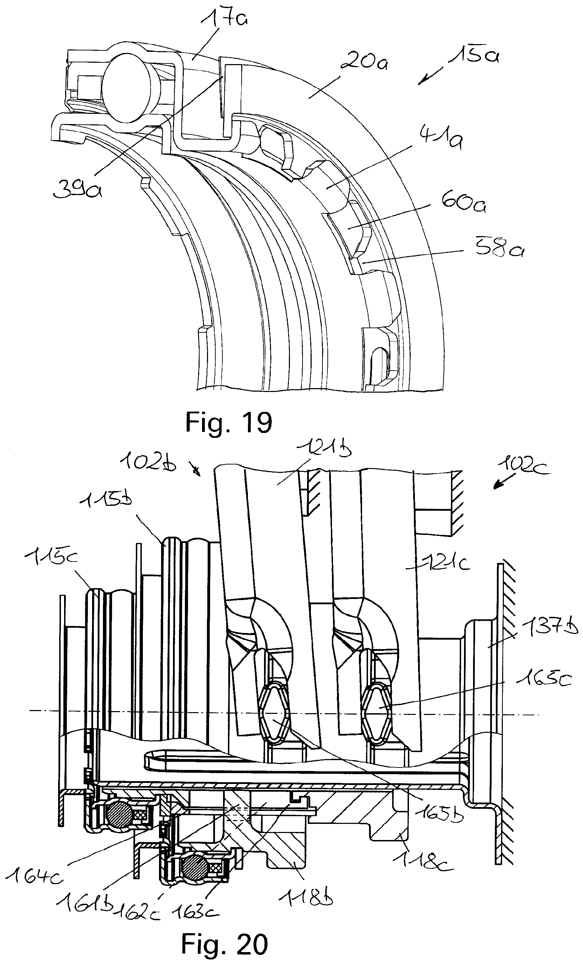

Die Figuren 9 und 10 zeigen das Betätigungslager 15d und den Lagerträger 18d im Schnitt beziehungsweise im nicht gefügten Zustand in Ansicht. Diese werden mittels der Schnappverbindung 45d drehfest und axial fest gefügt. Hierzu verfügen die Vertiefungen 48d des Lagerträgers 18d über radial endseitig elastisch verlagerbare Laschen 53d mit den Hinterschnitten 54d. Die Krallen 46d werden auf die Laschen 53d verschoben und verrasten mit den Hinterschnitten 54d. Auf den Erhebungen 47d ist der Lagerinnenring 16d aufgenommen. Zudem verhindern diese eine Verdrehung des Lagerinnenrings 16d gegenüber dem Lagerträger, indem diese einen Anschlag in Umfangsrichtung für die Krallen 46d bilden. Die Figuren 11 bis 19 zeigen jeweils in Ansicht und in geschnittener Schrägansicht die Ausbildung der Bajonettverbindung 42a der Figuren 2 bis 4 in unterschiedlichen Montagestadien. Hierbei sind der Übersichtlichkeit halber die während der Montage in die Anschlusskontur 14a gefügten Hebelelemente 9a weggelassen. Die Figuren 11 und 12 zeigen das Betätigungslager 15a ohne Abdeckscheibe 20a zu Beginn der Montage. Der Lageraußenring 17a weist den radial nach innen erweiterten Bereich mit der Abstützfläche 13a, den radial innen axial erweiterten zylindrischen Bereich 40a zur Aufnahme der Hebelelemente 9a (Figur 4) und die endseitig an diese nach radial außen umgelegten Abstützhaken 41a auf. In den Figuren 13 und 14 ist die Federscheibe 39a in den Lageraußenring 17a eingelegt. Hierzu greifen die Abstützhaken 41a in die Öffnungen 55a in der Federscheibe 39a ein. Die Öffnungen 55a sind radial innen mittels der Zungen 56a nur teilweise versschlossen. In den Figuren 15 und 16 ist die Abdeckscheibe 20a auf die Federscheibe 39a und damit auf den Lageraußenring 17a aufgebracht. Die Abdeckscheibe 20a weist radial innen offene Ausnehmungen 57a auf, die mittels der Anschläge 58a voneinander in Umfangsrichtung getrennt sind. Desweiteren sind über den Umfang verteilte Ausnehmungen 59a größeren Durchmessers in der Abdeckscheibe 20a vorgesehen, welche ein Aufschieben der Abdeckscheibe 20a über die Abstützhaken 41a erlaubt. Die Figuren 17 und 18 zeigen die gegenüber dem Lageraußenring 17a mittels der Anschläge 58a gegen die Abstützhaken 41a verdrehte Abdeckscheibe 20a, so dass die Abstützhaken 41a zwischen den Ausnehmungen 59a die Abdeckscheibe 20a übergreifen und die nicht dargestellten Hebelelemente 9a (Figur 4) unter axialer Vorspannung mittels der Federscheibe 39a zwischen den Abstützflächen 12a, 13a des Lageraußenrings 17a einerseits und der Abdeckscheibe andererseits elastisch aufgenommen sind. Die Figur 19 zeigt das fertig montierte Betätigungslager 15a. Hierbei greifen die Laschen 60a der Federscheibe 39a zwischen die Anschläge 58a der Abdeckscheibe 20a und die Abstützhaken 41a entgegen der erfolgten Verdrehung von Lageraußenring 17a und Abdeckscheibe 20a und verhindern dadurch eine Rückverdrehung der Abdeckscheibe 20a gegenüber dem Lageraußenring 17a.

Die Figur 20 zeigt einen Teilschnitt von zwei ineinander geschachtelten, im Wesentlichen den zuvor beschriebenen Betätigungseinrichtungen entsprechenden Betätigungseinrichtungen 102b, 102c zur Betätigung einer Doppelkupplung mit zwei integrierten Reibungskupplungen. Die koaxial um zwei koaxial zueinander angeordneten Getriebeeingangswellen angeordneten Betätigungslager 115b, 115c betätigen jeweils eine Reibungskupplung wie Teilkupplung einer Doppelkupplung. Beide Betätigungslager 115b, 115c sind mittels eines separaten Lagerträgers 118b, 118c und den Betätigungshebeln 121b, 121c mit jeweils einem nicht dargestellten Antrieb verbunden. Beide Lagerträger 121b, 121c sind auf der gemeinsamen Führungshülse 137b zentriert, ohne dass sich die Lagerträger 118b, 118c bei ihrer Axialbewegung gegenseitig behindern oder beeinflussen. Hierzu greift der radial äußere Lagerträger 118b mit radial nach innen ragenden Fortsätzen 161b durch Schlitze 162c im inneren Lagerträger 118c hindurch und stützt sich so radial auf der Führungshülse 137b ab. Die Lagerträger 118b, 118c übertragen Druck- und Zugkräfte. Hierzu ist der innere Lagerträger 118c axial teilbar ausgeführt, um die Fortsätze 161b des äußeren Lagerträgers 118b in die Schlitze 162c schieben zu können. Die Stege 163c zwischen den Schlitzen 162c sind an den lagerseitigen Teil des inneren Lagerträgers 118c angeformt und werden in den hebelseitigen Teil des inneren Lagerträgers 118c eingehängt. Um Spielfreiheit an den beiden Verbindungen zwischen dem Betätigungslager 115c, dem Lagerträger 118c und den beiden Hälften des Lagerträgers 118c sicherzustellen, werden die Verbindungen vorgespannt. Eine weitere Ausführungsform besteht darin, den inneren Lagerträger 118c einteilig auszuführen und den äußeren Lagerträger 118b mit abnehmbaren radialen Fortsätzen 161b auszustatten. Dadurch kann der äußere Lagerträger 118b ohne die Fortsätze 161b über den inneren Lagerträger 118c geschoben werden, bis er sich über den Schlitzen 162c des Lagerträgers 118c befindet. Anschließend werden die Fortsätze 161b von radial außen in die Schlitze 162c gesetzt, unter den Ringkörper 164c des Lagerträgers 118c geschoben und dort befestigt. Alternativ können die Fortsätze 161b von radial innen am äußeren Lagerträger 118b befestigt werden. Die Montage der Fortsätze 161b erfolgt dabei durch den inneren Lagerträger 118b hindurch, der zu diesem Zeitpunkt noch nicht auf der Führungshülse 137b montiert ist. Unabhängig davon, wie die Lagerträger 118b, 118c ausgebildet sind, können diese über die Betätigungslager 115b, 115c vorab mit der entsprechenden Reibungskupplung verbunden werden. Dadurch erfolgt die Montage der Doppelkupplung und der Betätigungseinrichtungen 102b, 102c entsprechend den zuvor beschriebenen Betätigungseinrichtungen. Die Lagerträger 118b, 118c werden bei der Montage der Doppelkupplung auf die Führungshülse 137b aufgeschoben und anschließend werden die beiden Betätigungshebel 121b, 121c auf die Kontaktzapfen 165b, 165c des jeweiligen Lagerträgers 118b, 118c gesteckt.

### Bezugszeichenliste

- 1: Reibungskupplung
- 2: Betätigungseinrichtung
- 2a: Betätigungseinrichtung
- 3: Hebelsystem
- 3a: Hebelsystem
- 4: Tellerfeder
- 5: Anpressplatte
- 6: Reibbelag
- 7: Kupplungsscheibe
- 8: Gegendruckplatte
- 9: Hebelelement
- 9a: Hebelelement
- 10: Getriebeeingangswelle
- 11: Kurbelwelle
- 12: Abstützfläche
- 12a: Abstützfläche
- 13: Abstützfläche
- 13a: Abstützfläche
- 14: Anschlusskontur
- 14a: Anschlusskontur
- 15: Betätigungslager
- 15a: Betätigungslager
- 15b: Betätigungslager
- 15c: Betätigungslager
- 15d: Betätigungslager
- 16: Lagerinnenring
- 16a: Lagerinnenring
- 16b: Lagerinnenring
- 16c: Lagerinnenring
- 16d: Lagerinnenring
- 17: Lageraußenring
- 17a: Lageraußenring
- 18: Lagerträger
- 18a: Lagerträger
- 18b: Lagerträger
- 18c: Lagerträger
- 18d: Lagerträger
- 19: Rillenkugellager
- 19a: Rillenkugellager
- 20: Abdeckscheibe
- 20a: Abdeckscheibe
- 21: Betätigungshebel
- 21a: Betätigungshebel
- 22: Antriebsstelle
- 23: Abtriebsstelle
- 24: Abstützstelle
- 25: Antrieb
- 26: Druckzylinder
- 27: Kolbenstange
- 28: Drehlager
- 29: Drehlager
- 30: Getriebegehäuse
- 31: Lagerung
- 32: Hebelende
- 33: Nut
- 34: Druckkammer
- 35: Druckkammer
- 36: Kolben
- 37a: Führungshülse
- 38a: Tasche
- 39a: Federscheibe
- 40a: zylindrischer Bereich
- 41a: Abstützhaken
- 42a: Bajonettverbindung
- 43a: Wölbung
- 44a: Wölbung
- 45a: Formschlussverbindung
- 45b: Formschlussverbindung
- 45c: Schraubverbindung
- 45d: Schnappverbindung
- 46a: Kralle
- 46b: Kralle
- 46c: Kralle
- 46d: Kralle
- 47a: Erhebung
- 47c: Gewinde
- 47d: Erhebung
- 48a: Vertiefung
- 48b: Vertiefung
- 48d: Vertiefung
- 49a: Sicherungsring
- 49b: Sicherungsring
- 50b: Rampeneinrichtung
- 51b: Nut
- 53d: Lasche
- 54d: Hinterschnitt
- 55a: Öffnung
- 56a: Zunge
- 57a: Ausnehmung
- 58a: Anschlag
- 59a: Ausnehmung
- 60a: Lasche
- 102b: Betätigungseinrichtung
- 102c: Betätigungseinrichtung
- 115b: Betätigungslager
- 115c: Betätigungslager
- 118b: Lagerträger
- 118c: Lagerträger
- 121b: Betätigungshebel
- 121c: Betätigungshebel
- 137b: Führungshülse
- 161b: Fortsatz
- 162c: Schlitz
- 163c: Steg
- 164c: Ringkörper
- 165b: Kontaktzapfen
- 165c: Kontaktzapfen

## Patentansprüche

1. Reibungskupplung (1) mit einer Gegendruckplatte (8), einer gegenüber dieser drehfest und axial von einem Hebelsystem (3, 3a) gegen diese vorspannbaren Anpressplatte (5), zwischen Gegendruckplatte (8) und Anpressplatte (5) angeordneten Reibbelägen (6) einer drehfest mit einer Getriebeeingangswelle (10) verbundenen Kupplungsscheibe (7) sowie einer die Anpressplatte (5) an radial innen an dem Hebelsystem (3, 3a) angeordneten, über den Umfang verteilten Hebelelementen (9, 9a) entlang eines Betätigungswegs verlagernden Betätigungseinrichtung (2, 2a, 102b, 102c) mit einem von einem Antrieb (25) verlagerten, koaxial um die Getriebeeingangswelle angeordneten Lagerträger (18, 18a, 18b, 18c, 18d, 118b, 118c) und einem zwischen Lagerträger (18, 18a, 18b, 18c, 18d, 118b, 118c) und Hebelelementen (9, 9a) angeordneten Betätigungslager (15, 15a, 15b, 15c, 15d, 115b, 115c), wobei das Betätigungslager (15, 15a, 15b, 15c, 15d, 115b, 115c) zur Übertragung von Zug- und Druckkräften auf die Hebelelemente (9, 9a) bidirektional Kraft übertragend ausgebildet ist und die Hebelelemente (9, 9a) an einem Lagerring des Betätigungslagers (15, 15a, 15b, 15c, 15d, 115b, 115c) in beide Richtungen entlang des Betätigungswegs im Wesentlichen spielfrei aufgenommen sind, **dadurch gekennzeichnet, dass** die Hebelelemente (9a) in beide axiale Richtungen im Bereich von die Hebelelemente (9a) axial abstützenden Abstützflächen (12a, 13a) eines Lagerrings Wölbungen (43a, 44a) ausbilden.

2. Reibungskupplung (1) nach Anspruch 1, **dadurch gekennzeichnet, dass** die Hebelelemente (9) axial beidseitig an ballig ausgebildeten Abstützflächen (12, 13) eines Lagerrings des Betätigungslagers (15) im Wesentlichen spielfrei angelegt sind.

3. Reibungskupplung (1) nach einem der Ansprüche 1 oder 2, **dadurch gekennzeichnet, dass** die Hebelelemente (9, 9a) in zumindest eine Richtung axial gegenüber einem Lagerring elastisch vorgespannt sind.

4. Reibungskupplung (1) mit einer Gegendruckplatte (8), einer gegenüber dieser drehfest und axial von einem Hebelsystem (3, 3a) gegen diese vorspannbaren Anpressplatte (5), zwischen Gegendruckplatte (8) und Anpressplatte (5) angeordneten Reibbelägen (6) einer drehfest mit einer Getriebeeingangswelle (10) verbundenen Kupplungsscheibe (7) sowie einer die Anpressplatte (5) an radial innen an dem Hebelsystem (3, 3a) angeordneten, über den Umfang verteilten Hebelelementen (9, 9a) entlang eines Betätigungswegs verlagernden Betätigungseinrichtung (2, 2a, 102b, 102c) mit einem von einem Antrieb (25) verlagerten, koaxial um die Getriebeeingangswelle angeordneten Lagerträger (18, 18a, 18b, 18c, 18d, 118b, 118c) und einem zwischen Lagerträger (18, 18a, 18b, 18c, 18d, 118b, 118c) und Hebelelementen (9, 9a) angeordneten Betätigungslager (15, 15a, 15b, 15c, 15d, 115b, 115c), wobei das Betätigungslager (15, 15a, 15b, 15c, 15d, 115b, 115c) zur Übertragung von Zug-und Druckkräften auf die Hebelelemente (9, 9a) bidirektional Kraft übertragend ausgebildet ist und die Hebelelemente (9, 9a) an einem Lagerring des Betätigungslagers (15, 15a, 15b, 15c, 15d, 115b, 115c) in beide Richtungen entlang des Betätigungswegs im Wesentlichen spielfrei aufgenommen sind, **dadurch gekennzeichnet, dass** der die Hebelelemente (9a) beaufschlagende Lagerring als Lageraußenring (17a) mit einer ersten nach radial innen erweiterten Abstützfläche (13a) und einer zweiten, axial beabstandet zu dieser auf einer Abdeckscheibe (20a) vorgesehenen Abstützfläche (12a) ausgebildet ist, wobei Lageraußenring (17a) und Abdeckscheibe (20a) mittels einer Formschlussverbindung nach Einbringen der Hebelelemente (9a) miteinander axial fest und drehfest miteinander verbunden sind.

5. Reibungskupplung nach Anspruch 4, **dadurch gekennzeichnet, dass** die Abdeckscheibe im Querschnitt gewinkelt ausgebildet ist und mit nach radial außen an dem Lageraußenring erweiterten Abstützhaken die Formschlussverbindung bildet.

6. Reibungskupplung nach Anspruch 4, **dadurch gekennzeichnet, dass** die Abdeckscheibe (20a) im Wesentlichen plan ausgebildet ist und mit einem radial inneren zylindrischen Bereich (40a) eines Lagerrings (17a) mittels endseitiger, nach radial außen erweiterter Abstützhaken (41a) des Lagerrings (17a) die Formschlussverbindung bildet.

7. Reibungskupplung nach einem der Ansprüche 4 bis 6, **dadurch gekennzeichnet, dass** zwischen Hebelelementen (9a) einerseits und Abdeckscheibe (20a) und/oder Lagerring andererseits eine axial wirksame Federscheibe (39a) vorgesehen ist.

8. Reibungskupplung nach Anspruch 7, **dadurch gekennzeichnet, dass** Abdeckscheibe (20a) und Federscheibe (39a) im Sinne einer Bajonettverbindung in die Abstützhaken (41a) eingreifen und die Federscheibe (39a) für die Abdeckscheibe (20a) gegenüber dem Lageraußenring (17a) eine Verdrehsicherung bildet.

9. Reibungskupplung nach einem der Ansprüche 1 bis 8, **dadurch gekennzeichnet, dass** das Betätigungslager (15a, 15b, 15c, 15d, 115b, 115c) auf dem Lagerträger (18, 18a, 18b, 18c, 18d, 118b, 118c) mittels einer Rast-, Bajonett- oder Schraubverbindung verbunden ist.

## Claims

1. Friction clutch (1) having a counterpressure plate (8), a pressure plate (5) which is rotationally locked with respect to the former and can be prestressed against the former axially by a lever system (3, 3a), friction linings (6) of a clutch disc (7) which is connected fixedly to a transmission input shaft (10) so as to rotate with it, which friction linings (6) are arranged between the counterpressure plate (8) and the pressure plate (5), and an actuating device (2, 2a, 102b, 102c) which moves the pressure plate (5) along an actuating path on lever elements (9, 9a) which are arranged radially on the inside on the lever system (3, 3a) and are distributed over the circumference, which actuating device (2, 2a, 102b, 102c) has a bearing carrier (18, 18a, 18b, 18c, 18d, 118b, 118c) which is moved by a drive (25) and is arranged coaxially around the transmission input shaft, and has an actuating bearing (15, 15a, 15b, 15c, 15d, 115b, 115c) which is arranged between the bearing carrier (18, 18a, 18b, 18c, 18d, 118b, 118c) and lever elements (9, 9a), the actuating bearing (15, 15a, 15b, 15c, 15d, 115b, 115c) being configured so as to transmit force bidirectionally for the transmission of tensile and compressive forces onto the lever elements (9, 9a), and the lever elements (9, 9a) being received substantially without play in both directions along the actuating path on a bearing ring of the actuating bearing (15, 15a, 15b, 15c, 15d, 115b, 115c), **characterized in that** the lever elements (9a) configure bulges (43a, 44a) in both axial directions in the region of supporting faces (12a, 13a) of a bearing ring which support the lever elements (9a) axially.

2. Friction clutch (1) according to Claim 1, **characterized in that** the lever elements (9) are placed substantially without play axially on both sides against supporting faces (12, 13) of spherical configuration of a bearing ring of the actuating bearing (15).

3. Friction clutch (1) according to either of Claims 1 and 2, **characterized in that** the lever elements (9, 9a) are elastically prestressed axially with respect to a bearing ring in at least one direction.

4. Friction clutch (1) having a counterpressure plate (8), a pressure plate (5) which is rotationally locked with respect to the former and can be prestressed against the former axially by a lever system (3, 3a), friction linings (6) of a clutch disc (7) which is connected fixedly to a transmission input shaft (10) so as to rotate with it, which friction linings (6) are arranged between the counterpressure plate (8) and the pressure plate (5), and an actuating device (2, 2a, 102b, 102c) which moves the pressure plate (5) along an actuating path on lever elements (9, 9a) which are arranged radially on the inside on the lever system (3, 3a) and are distributed over the circumference, which actuating device (2, 2a, 102b, 102c) has a bearing carrier (18, 18a, 18b, 18c, 18d, 118b, 118c) which is moved by a drive (25) and is arranged coaxially around the transmission input shaft, and has an actuating bearing (15, 15a, 15b, 15c, 15d, 115b, 115c) which is arranged between the bearing carrier (18, 18a, 18b, 18c, 18d, 118b, 118c) and lever elements (9, 9a), the actuating bearing (15, 15a, 15b, 15c, 15d, 115b, 115c) being configured so as to transmit force bidirectionally for the transmission of tensile and compressive forces onto the lever elements (9, 9a), and the lever elements (9, 9a) being received substantially without play in both directions along the actuating path on a bearing ring of the actuating bearing (15, 15a, 15b, 15c, 15d, 115b, 115c), **characterized in that** the bearing ring which loads the lever elements (9a) is configured as a bearing outer ring (17a) with a first supporting face (13a) which is widened radially to the inside and a second supporting face (12a) which is provided on a covering plate (20a) in a manner which is spaced apart axially from the said first supporting face (13a), the bearing outer ring (17a) and the covering plate (20a) being connected to one another in an axially fixed manner and fixedly so as to rotate with one another by means of a positively locking connection after the introduction of the lever elements (9a).

5. Friction clutch according to Claim 4, **characterized in that** the covering plate is of angled configuration in cross section and forms the positively locking connection with supporting hooks which are widened radially to the outside on the bearing outer ring.

6. Friction clutch according to Claim 4, **characterized in that** the covering plate (20a) is of substantially planar configuration and forms the positively locking connection with a radially inner cylindrical region (40a) of a bearing ring (17a) by means of end-side supporting hooks (41a) of the bearing ring (17a) which are widened radially to the outside.

7. Friction clutch according to one of Claims 4 to 6, **characterized in that** an axially acting disc spring (39a) is provided between the lever elements (9a) on one side and the covering plate (20a) and/or the bearing ring on the other side.

8. Friction clutch according to Claim 7, **characterized in that** the covering plate (20a) and the disc spring (39a) engage into the supporting hooks (41a) in the manner of a bayonet connection, and the disc spring (39a) forms an anti-rotation safeguard for the covering plate (20a) with respect to the bearing outer ring (17a).

9. Friction clutch according to one of Claims 1 to 8, **characterized in that** the actuating bearing (15a, 15b, 15c, 15d, 115b, 115c) is connected on the bearing carrier (18, 18a, 18b, 18c, 18d, 118b, 118c) by means of a latching, bayonet or screw connection.

## Revendications

1. Embrayage à friction (1) comprenant une plaque de contre-pression (8), une plaque de pression (5) pouvant être précontrainte axialement par un système de levier (3, 3a) en direction de ladite plaque de contre-pression et solidairement en rotation par rapport à celle-ci, des garnitures de friction (6), disposées entre la plaque de contre-pression (8) et la plaque de pression (5), d'un disque d'embrayage (7) relié solidairement en rotation à un arbre d'entrée de transmission (10) ainsi qu'un dispositif d'actionnement (2, 2a, 102b, 102c), déplaçant la plaque de pression (5) le long d'un chemin d'actionnement au niveau d'éléments de levier (9, 9a), répartis sur la périphérie et disposés radialement à l'intérieur au niveau du système de levier (3, 3a), et comportant un support de palier (18, 18a, 18b, 18c, 18d, 118b, 118c) déplacé par un entraînement (25) et disposé coaxialement à l'arbre d'entrée de transmission et un palier d'actionnement (15, 15a, 15b, 15c, 15d, 115b, 115c) disposé entre le support de palier (18, 18a, 18b, 18c, 18d, 118b, 118c) et des éléments de levier (9, 9a), le palier d'actionnement (15, 15a, 15b, 15c, 15d, 115b, 115c) étant conçu de manière à effectuer une transmission de force bidirectionnelle afin de transmettre des forces de traction et de compression aux éléments de levier (9, 9a) et les éléments de levier (9, 9a) étant reçus au niveau d'une bague du palier d'actionnement (15, 15a, 15b, 15c, 15d, 115b, 115c) sensiblement sans jeu dans les deux directions le long du chemin d'actionnement, **caractérisé en ce que** les éléments de levier (9a) forment des bombements dans les deux directions axiales dans la région de surfaces de support (12a, 13a), supportant axialement les éléments de levier (9a), d'une bague de palier (43a, 44a) .

2. Embrayage à friction (1) selon la revendication 1, **caractérisé en ce que** les éléments de levier (9) sont appliqués sensiblement sans jeu axialement des deux côtés des surfaces de support convexes (12, 13) d'une bague du palier d'actionnement (15).

3. Embrayage à friction (1) selon l'une des revendications 1 ou 2, **caractérisé en ce que** les éléments de levier (9, 9a) sont précontraints élastiquement dans au moins une direction, axialement par rapport à une bague de palier.

4. Embrayage à friction (1) comprenant une plaque de contre-pression (8), une plaque de pression (5) pouvant être précontrainte axialement par un système de levier (3, 3a) en direction de ladite plaque de contre-pression et solidairement en rotation par rapport à celle-ci, des garnitures de friction (6), disposées entre la plaque de contre-pression (8) et la plaque de pression (5), d'un disque d'embrayage (7) relié solidairement en rotation à un arbre d'entrée de transmission (10) ainsi qu'un dispositif d'actionnement (2, 2a, 102b, 102c), déplaçant la plaque de pression (5) le long d'un chemin d'actionnement au niveau d'éléments de levier (9, 9a), répartis sur la périphérie et disposés radialement à l'intérieur au niveau du système de levier (3, 3a), et comportant un support de palier (18, 18a, 18b, 18c, 18d, 118b, 118c) déplacé par un entraînement (25) et disposé coaxialement à l'arbre d'entrée de transmission et un palier d'actionnement (15, 15a, 15b, 15c, 15d, 115b, 115c) disposé entre le support de palier (18, 18a, 18b, 18c, 18d, 118b, 118c) et des éléments de levier (9, 9a), le palier d'actionnement (15, 15a, 15b, 15c, 15d, 115b, 115c) étant conçu de manière à effectuer une transmission de force bidirectionnelle afin de transmettre des forces de traction et de compression aux éléments de levier (9, 9a) et les éléments de levier (9, 9a) étant reçus au niveau d'une bague du palier d'actionnement (15, 15a, 15b, 15c, 15d, 115b, 115c) sensiblement sans jeu dans les deux directions le long du chemin d'actionnement, **caractérisé en ce que** la bague de palier sollicitant les éléments de levier (9a) est conçue comme une bague de palier extérieure (17a) pourvue d'une première surface de support (13a) s'élargissant radialement vers l'intérieur et une deuxième surface de support (12a) prévue sur un disque de recouvrement (20a) et espacée axialement de ladite première surface de support, la bague de palier extérieure (17a) et le disque de recouvrement (20a) étant reliés entre eux axialement de manière fixe et solidairement en rotation au moyen d'une liaison par complémentarité de formes après insertion des éléments de levier (9a).

5. Embrayage à friction selon la revendication 4, **caractérisé en ce que** la plaque de recouvrement est conçue de manière à être coudée en coupe transversale et forme, avec des crochets de support étendus radialement vers l'extérieur au niveau de la bague de palier, la liaison par complémentarité de formes.

6. Embrayage à friction selon la revendication 4, **caractérisé en ce que** la plaque de recouvrement (20a) est conçue pour être sensiblement plane et forme avec une région cylindrique radialement intérieure (40a) d'une bague de palier (17a) la liaison par complémentarité de formes au moyen de crochets de support (41a) côté extrémité étendus radialement vers l'extérieur, de la bague de palier (17a).

7. Embrayage à friction selon l'une des revendications 4 à 6, **caractérisé en ce qu'**une rondelle élastique (39a) à action axiale est prévue entre les éléments de levier (9a) d'une part et le disque de recouvrement (20a) et/ou la bague de palier d'autre part.

8. Embrayage à friction selon la revendication 7, **caractérisé en ce que** le disque de recouvrement (20a) et la rondelle élastique (39a) s'engagent dans les crochets de support (41a) au sens d'une liaison à baïonnette et la rondelle élastique (39a) destinée au disque de recouvrement (20a) forme une sécurité anti-rotation par rapport à la bague de palier extérieure (17a).

9. Embrayage à friction selon l'une des revendications 1 à 8, **caractérisé en ce que** le palier d'actionnement (15a, 15b, 15c, 15d, 115b, 115c) est relié au support de palier (18, 18a, 18b, 18c, 18d, 118b, 118c) au moyen d'une liaison par encliquetage, à baïonnette ou à vis.
